(19) Europäisches Patentamt
European Patent Office
Office européen des brevets

(11) **EP 2 798 141 B1**

(12) **FASCICULE DE BREVET EUROPEEN**

(45) Date de publication et mention
de la délivrance du brevet:
**16.12.2015 Bulletin 2015/51**

(21) Numéro de dépôt: **12821278.4**

(22) Date de dépôt: **20.12.2012**

(51) Int Cl.:
**E21B 17/042** $^{(2006.01)}$ **F16L 15/00** $^{(2006.01)}$

(86) Numéro de dépôt international:
**PCT/FR2012/000542**

(87) Numéro de publication internationale:
**WO 2013/098491 (04.07.2013 Gazette 2013/27)**

(54) **JOINT FILETÉ À FAIBLE COUPLE DE VISSAGE**

GEWINDEVERBINDUNG MIT NIEDRIGEM EINDREHMOMENT

THREAD JOINT WITH LOW TIGHTENING TORQUE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.12.2011 FR 1104147**

(43) Date de publication de la demande:
**05.11.2014 Bulletin 2014/45**

(73) Titulaire: **VALLOUREC OIL AND GAS FRANCE**
**59620 Aulnoye-Aymeries (FR)**

(72) Inventeurs:
• **DAVID, Didier**
**F-59530 Ruesnes (FR)**

• **CARROIS, Fabien**
**F-59530 Le Quesnoy (FR)**

(74) Mandataire: **Julio, Charlotte**
**Vallourec Tubes**
**Département Propriété Industrielle**
**27, avenue du Général Leclerc**
**92100 Boulogne-Billancourt (FR)**

(56) Documents cités:
**WO-A1-98/50721       WO-A1-2004/109173
WO-A1-2006/092649**

## Description

L'invention a pour objet des composants tubulaires utilisés pour le forage ou l'exploitation de gisements pétroliers ou gaziers. L'invention s'applique notamment aux composants utilisés en mer, depuis des plateformes dites « offshores », en particulier aux composants disposés dans des colonnes de dépose, dites « landing string ».

Reliant la plateforme en mer au fond sous marin, une tubulure, dite « marine riser », assure une continuité topologique et hydraulique entre le navire et l'intérieur du puits formé depuis le fond marin. La colonne de dépose est descendue dans cette tubulure.

Les colonnes de déposes sont utiles pour la dépose d'éléments, tels que des tubes de cuvelage (casing), d'exploitation (tubing) ou encore d'outillages divers tels que par exemple des têtes de puits sous marines à disposer à l'entrée du puits depuis le fond marin. En particulier ces têtes de puits sous marines peuvent comporter des dispositifs de sécurité visant à éviter les surpressions dans le puits. Ces éléments sont lourds et une contrainte en traction de plusieurs milliers de tonnes s'exerce sur chaque composant tubulaire formant la colonne de dépose.

Une colonne de dépose est formée par une série de composants tubulaires vissés bout à bout. Classiquement chaque composant comporte une extrémité filetée de connexion mâle, dite « pin », axialement opposée à une extrémité de connexion filetée femelle, dite « box ».

L'extrémité de connexion mâle se dresse depuis un épaulement de butée externe, formant une zone d'appui annulaire pour une face avant d'une extrémité femelle avec laquelle il est destiné à être vissé. La connexion est assurée lorsque la face avant vient en butée contre l'épaulement. La connexion doit pouvoir résister à au moins mille tonnes exercées en traction.

A ce titre, le couple de vissage à appliquer pour atteindre une connexion fiable du joint fileté est déterminé selon un profil de courbe de vissage à respecter.

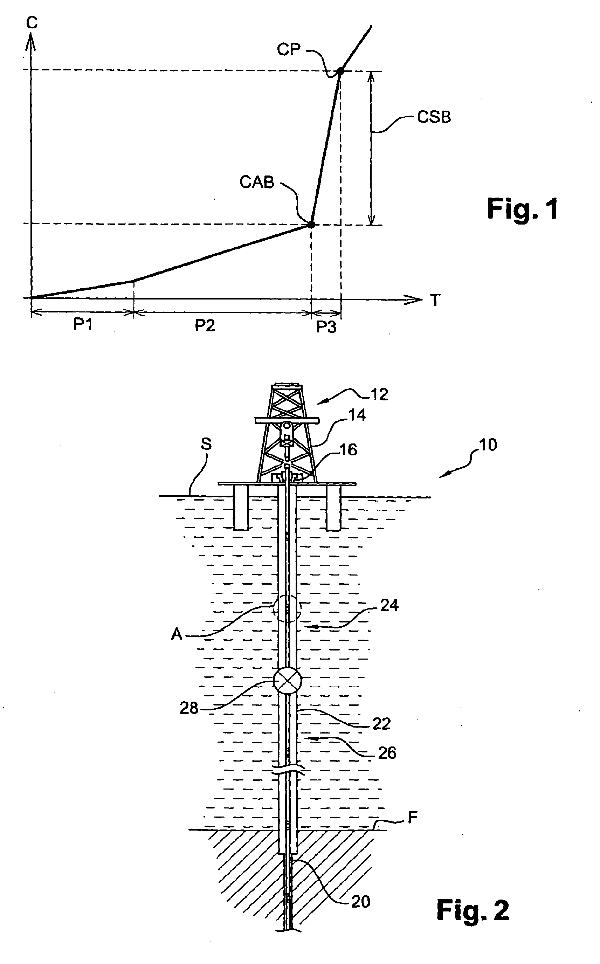

La courbe en figure 1 exprime le couple de vissage (ou serrage) d'une connexion en fonction du nombre de tours de rotation effectués. Comme on peut l'observer, un profil de couple de vissage de connexion entre deux extrémités filetées est décomposé en trois parties.

Une première partie P1 pendant laquelle les filets extérieurs de l'élément fileté mâle (ou «pin») d'un premier composant d'une connexion filetée tubulaire ne présentent pas encore de serrage radial avec les filets intérieurs de l'élément fileté femelle correspondant (ou «box») d'un second composant de cette même connexion filetée tubulaire.

Une deuxième partie P2 pendant laquelle l'interférence géométrique des filets des éléments filetés mâle et femelle génère un serrage radial qui augmente au fur et à mesure du vissage (en générant un couple de vissage faible mais croissant).

Une troisième partie P3 pendant laquelle la surface frontale d'extrémité de l'élément fileté mâle est en butée axiale avec la surface annulaire d'une butée de vissage de l'élément fileté femelle. Cette troisième partie P3 correspond à la phase terminale de vissage.

Le couple de vissage CAB qui correspond à la fin de la deuxième partie P2 et au début de la troisième partie P3 est appelé couple d'accostage butée (ou « shouldering torque »).

Le couple de vissage CP qui correspond à la fin de la troisième partie P3 est appelé couple de plastification (ou « yielding torque »). Au-delà de ce couple de plastification CP, on considère que la butée de vissage mâle (partie d'extrémité de l'élément fileté mâle) et/ou la butée de vissage femelle (zone située derrière la surface annulaire de butée de l'élément fileté femelle) est (ou sont) l'objet d'une déformation plastique, laquelle peut dégrader les performances d'étanchéité du contact entre surfaces d'étanchéité.

La différence entre les valeurs des couples de plastification CP et couple d'accostage butée CAB est appelée couple sur butée (ou « torque on shoulder résistance ») CSB (CSB = CP - CAB). Une connexion filetée tubulaire est l'objet d'un serrage optimal en fin de vissage, qui est le gage d'une résistance mécanique optimale de l'assemblage fileté, par exemple aux efforts de traction mais aussi au dévissage accidentel en service, et de performances optimales d'étanchéité.

Le concepteur de connexion filetée est ainsi amené à définir pour un type de connexion filetée donnée une valeur de couple optimal de vissage qui doit être, pour tous les assemblages de ce type de connexion, inférieure au couple de plastification CP (pour éviter la plastification des butées et les inconvénients qui en résultent) et supérieure au couple d'accostage butée CAB.

Une fin de vissage à un couple inférieur à CAB ne permet en effet pas de garantir un positionnement relatif correct des éléments mâle et femelle et par là un serrage efficace entre leurs surfaces d'étanchéité. Il y a de plus des risques de dévissage. La valeur effective du couple d'accostage butée CAB fluctue beaucoup d'un assemblage à l'autre pour un même type de connexion car elle dépend des tolérances d'usinage diamétrales et axiales des filets et des surfaces d'étanchéité mâle(s) et femelle(s), et il convient que le couple optimal de vissage soit substantiellement plus élevé que le couple d'accostage butée CAB.

Par conséquent, plus la valeur du couple sur butée CSB sera importante, plus on aura de marge pour définir le couple optimal de vissage, et plus la connexion filetée sera résistante aux sollicitations en service.

Dans le domaine pétrolier, la spécification API 7 relative aux composants de forage rotatif (API pour "American Petroleum Institute") prévoit un type de filetage particulier, ainsi qu'un système à simple butée (dite "externe"). Cette butée externe est fournie dans le cas d'un élément femelle par la portion d'extrémité libre de cet élément et dans le cas d'un élément mâle par une surface annulaire radiale (externe) terminant un corps sensiblement cylindrique, définissant un épaulement à partir de la surface externe du corps et liée par une base cylindrique, de diamètre externe inférieur à celui du corps, à une portion de connexion de forme générale tronconique, de diamètre externe décroissant en s'éloignant de la base, et munie extérieurement d'une partie filetée mâle propre à être vissée dans une partie filetée correspondante d'un élément femelle d'un autre composant de forage, cette partie filetée s'étendant sensiblement jusqu'à l'extrémité libre de l'élément mâle.

Dans le domaine pétrolier, la spécification ISO-13628 s'applique plus spécifiquement aux « risers » et en particulier aux colonnes de dépose.

Différents constructeurs de composants de forage ont proposé des éléments mâles et femelles avec des filetages plus évolués ainsi qu'avec une double butée. Ces propositions spécifiques ont pour but de permettre de transmettre un couple plus important, à dimensions comparables. En contrepartie, pour fonctionner correctement, les éléments mâles et femelles à double butée doivent être très bien ajustés, de sorte que les appuis sur les deux butées puissent se faire harmonieusement.

Dans l'état de la technique on connaît notamment des documents FR-2904031, US-4548431 et WO-2006-092649 un composant tubulaire destiné à former une colonne de forage comportant des extrémités filetées de connexion à double butée présentant un couple optimal de vissage très élevé, afin qu'il soit nettement supérieur au couple de torsion auquel le composant pourrait être soumis dans le puits à forer.

On connaît également du document de l'art antérieur, US-2010-0308577, une colonne de dépose dont les composants présentent une épaisseur de paroi supérieure à 12,7 cm, et dont le couple optimal de vissage est supérieur à 75 000 ft.lbs. En particulier, le composant selon ce document présente une surface de contact annulaire entre l'épaulement de butée de l'extrémité mâle d'un tel composant et la face avant d'une extrémité femelle d'un composant complémentaire, telle que cette surface de contact présente un diamètre externe compris entre 19,05 et 21,59 cm.

Or les colonnes de dépose servent également à l'opération de cimentation visant à figer en place le casing descendu, ou encore à fermer momentanément l'entrée du puits en vue d'une future exploitation ou de la fin d'une période d'exploitation du puits.

Lors des opérations de cimentation, le ciment est coulé dans la colonne de dépose, et des résidus de ciment peuvent se figer à l'intérieur de la colonne et rendre difficile son démontage lorsque la colonne de dépose est sortie de la tubulure pour être remplacée par des colonnes permettant la progression du forage ou de l'exploitation du puits.

De plus, lors de l'opération de cimentation, la pression interne dans la colonne de dépose peut être très élevée, par exemple de l'ordre de milliers de tonnes/m$^2$.

Les colonnes de dépose de l'art antérieur posent un problème au montage et au démontage dans la mesure où il faut assurer des connexions solides entre les composants tubulaires étant données les forces en traction auxquelles elles seront soumises et également pouvoir les nettoyer facilement entre deux usages. En effet, il faut limiter le temps non productif de telles colonnes, et préserver leur intégrité en opération. A cette fin, il est nécessaire de pouvoir les nettoyer correctement, sans pour autant augmenter les couples de vissage et donc de dévissage auxquels ce type de colonne doit être manipulé sur site. Or les outils de montage et démontage disponibles sur les plateformes, notamment offshore, sont limitées en couple de vissage, et la précision de leur manipulation est très difficile à obtenir en haute mer. En effet, ces outils de vissage disponibles ont généralement une capacité de vissage limitée à 70 000 ft.lbs, maximum 75 000 ft.lbs. Et un outil de vissage dont la capacité est supérieure à 75 000 ft.lbs est très coûteux, non standard, et rarement présent sur de telles plateformes.

Une colonne de dépose soumise sur site à une force en traction de plus d'un millier de tonnes subit, au niveau de sa connexion, une modification du régime de lubrification du fluide déposé sur les filets de vissage coopérant ensemble. Cette modification contribuera à une augmentation des contraintes en friction entre les filets au moment du dévissage. Ainsi il existe une contrainte sur les outils de vissage/ dévissage qui doivent à la fois amener la connexion à son couple de vissage optimal avant usage, et également être en mesure de dévisser ces mêmes connexions après usage.

De plus, ces colonnes de dépose ne sont pas utilisées en permanence sur les plateformes. Il existe en plus un besoin pour pouvoir entreposer les composants de ces colonnes sans avoir de précautions nombreuses à respecter. En effet, ces composants de colonne de dépose sont classiquement stockés en position verticale, en particulier en appui sur l'extrémité de connexion mâle. Il existe donc un besoin pour une extrémité de connexion mâle robuste.

L'invention a donc pour objet de proposer des composants tubulaires permettant de résoudre au moins tout ou partie des problèmes identifiés ci-dessus et facilitant notamment la manutention des composants tubulaires en proposant de grandes tolérances par rapport au couple à appliquer, tout en garantissant la qualité de la connexion.

L'invention a donc pour objet un joint fileté tubulaire comprenant un premier composant tubulaire vissé sur un deuxième composant tubulaire, lesdits composants tubulaires étant destinés à l'exploration ou l'exploitation d'un puits d'hydrocarbures, notamment destiné à former une colonne de dépose,

- le premier composant tubulaire comportant un premier corps sensiblement cylindrique d'axe de révolution terminé par une butée externe, cette butée externe étant reliée au pourtour extérieur du premier corps par un quatrième profil de diamètre extérieur croissant de la butée externe vers le premier corps, et liée à une portion de connexion mâle filetée prolongée par une portion terminale non filetée formant une surface de butée interne à son extrémité axiale, telle que la butée interne est reliée au pourtour intérieur du premier corps par un premier profil de diamètre intérieur décroissant de la butée interne vers l'intérieur du premier corps

- le deuxième composant tubulaire comportant un deuxième corps sensiblement cylindrique définissant à une extrémité libre une surface d'appui pour la butée externe, cette surface d'appui étant reliée au pourtour extérieur du deuxième corps par un troisième profil de diamètre extérieur croissant de la surface d'appui vers le corps, le corps présentant sur sa surface interne une portion initiale non filetée reliant la surface d'appui à une portion de connexion femelle filetée, propre à être vissée à la portion de connexion mâle filetée, et se terminant par un épaulement interne en regard de la butée interne, l'épaulement interne étant relié au pourtour intérieur du deuxième corps par un deuxième profil de diamètre intérieur décroissant de l'épaulement interne vers l'intérieur du corps

caractérisé en ce que l'un au moins du premier profil ou du deuxième profil est convexe ou concave, et

que la longueur du premier profil et ou du deuxième profil le long de l'axe de révolution est supérieure à 1/16" (1.5875 mm) et inférieure à la longueur de la portion terminale,

et ou en ce que la longueur du troisième profil et ou du quatrième profil le long de l'axe de révolution est supérieure à 1/16" (1.5875 mm) et inférieure à la longueur de la portion initiale.

Le seuil minimal de 1/16" correspond à un seuil permettant le refaçage ultérieur du joint.

Lorsque l'épaulement interne est en regard de la butée interne, lorsque le joint est formé, l'épaulement interne peut être au contact ou à distance de la butée interne.

En particulier, un profil concave peut permettre d'obtenir un résultat amélioré quant à la transmission des forces appliquées, et donc limiter ainsi les risques de fatigue et de rupture. A contrario, un profil convexe peut permettre une amélioration des performances hydrauliques du joint.

Par exemple, l'un au moins du premier profil ou du deuxième profil peut être exclusivement convexe ou exclusivement concave.

Avantageusement, l'un au moins du premier profil ou du deuxième profil n'est pas plan.

Par exemple, l'un au moins du premier profil ou du deuxième profil peut comporter successivement une portion plane et une portion convexe ; ou successivement une portion plane et une portion concave, ou encore comporter trois portions respectivement plane, concave et convexe.

En variante, l'un au moins du premier profil ou du deuxième profil peut comporter une succession de deux portions planes formant un angle entre elles de manière à créer l'un d'une concavité ou d'une convexité.

Avantageusement, les longueurs (L1, L2, L3, L4) des premier (41), deuxième (42), troisième (43) et quatrième (44) profils peuvent être comprises entre 3 mm et 50 mm, de préférence entre 10 et 25 mm, mieux entre 15 et 20 mm.

Avantageusement, l'un au moins du troisième profil ou du quatrième profil peut être convexe ou concave.

Par exemple, l'un au moins du troisième profil ou du quatrième profil peut être exclusivement convexe ou exclusivement concave.

Avantageusement, l'un au moins du troisième profil ou du quatrième profil peut ne pas être plan.

Par exemple, l'un au moins du troisième profil ou du quatrième profil peut comporter successivement une portion plane et une portion convexe ; ou successivement une portion plane et une portion concave, ou encore comporter trois portions respectivement plane, concave et convexe.

En variante, l'un au moins du troisième profil ou du quatrième profil peut comporter une succession de deux portions planes formant un angle entre elles de manière à créer l'un d'une concavité ou d'une convexité.

Avantageusement, le troisième profil peut être symétrique du quatrième profil. Une telle configuration présente l'avantage d'éviter la concentration de contraintes au voisinage du plan de contact entre butée externe BE et surface d'appui SA, et également la déformation des matériaux formant respectivement le premier et le deuxième corps.

Avantageusement encore, le premier profil peut être symétrique du deuxième profil. Une telle configuration présente l'avantage d'éviter la concentration de contraintes au voisinage du plan de contact entre butée interne et épaulement interne, lorsqu'ils sont en contact, et également la déformation des matériaux formant respectivement le premier et le deuxième corps.

Par exemple, l'un des profils peut présenter une pente supérieure à 10°.

En particulier, l'un des profils peut présenter une portion de courbure convexe.

En variante, l'un des profils peut présenter une portion de courbure concave.

Par exemple, l'un des profils peut être un arc de cercle ou d'ellipse.

Avantageusement, la butée interne peut être reliée par une première pente à la portion terminale, et l'épaulement interne peut être relié par une deuxième pente à une deuxième base prolongée par la portion de connexion femelle, les deux pentes étant sécantes et formant chacune un angle non nul avec le plan de contact entre la butée interne et l'épaulement interne. Une telle configuration présente l'avantage d'éviter la concentration de contraintes au voisinage du plan de contact entre butée interne et épaulement interne, lorsqu'ils sont en contact, et également la déformation des matériaux formant respectivement le premier et le deuxième corps, et ce d'autant plus que les pentes sont symétriques.

En particulier, la première et la deuxième pente peuvent avoir un sommet commun. Cette configuration permet d'éviter le poinçonnage de la surface de butée. Dans le même objectif, le premier profil peut avoir une extrémité commune avec une extrémité du deuxième profil.

De manière similaire, la surface d'appui peut être reliée par une troisième pente à la portion initiale et la butée externe peut être reliée par une quatrième pente à une base prolongée par la portion de connexion mâle, les deux pentes étant sécantes et formant chacune un angle non nul avec le plan de contact entre la butée externe et la surface d'appui. Une telle configuration présente l'avantage d'éviter la concentration de contraintes au voisinage du plan de contact entre butée externe BE et surface d'appui SA, et également la déformation des matériaux formant respectivement le premier et le deuxième corps, et ce d'autant plus que les pentes sont symétriques.

En particulier, la troisième et la quatrième pente peuvent avoir un sommet commun. Cette configuration permet d'éviter le poinçonnage de la surface de butée. Dans le même objectif, le troisième profil peut avoir une extrémité commune avec une extrémité du quatrième profil.

De préférence, la butée interne a une épaisseur radiale, destinée à être mise au contact de l'épaulement intérieur, qui peut être déterminée de façon à supporter, sans observer de plastification, une force de compression au moins égale à 4,5 fois le poids du corps auquel elle est attachée, ou au moins égale à 1,5 fois le poids d'au moins deux, par exemple d'au moins trois, et de préférence quatre, corps tubulaires joints bout à bout et terminés axialement par ladite butée interne. Cette configuration permet de favoriser le stockage de stands composés de deux ou trois tiges de longueur « range 3 », à savoir de longueur de l'ordre de 42.5 ft, ou bien de trois ou quatre tiges de longueur « range 2 », à savoir de longueur de l'ordre de 30ft. Ce stockage sur site d'exploitation est dénommé « back racking ».

Selon l'invention, le premier corps peut être soudé à une extrémité d'un corps de tige de révolution tel que la butée externe est axialement opposée à la soudure, et le deuxième corps peut être soudé à une extrémité d'un autre corps de tige de révolution tel que la surface d'appui est axialement opposée à la soudure. Dans ce cas, les corps C1 et C2 peuvent être appelés « tool-joint ».

L'invention a également pour objet un procédé d'assemblage d'un joint fileté selon l'une quelconque des revendications précédentes caractérisé en ce qu'un couple de serrage supérieur au couple d'accostage butée CAB dudit joint est obtenu au moyen d'une clé présentant une capacité de couple inférieure à 75 000 ft.lbs.

L'invention sera mieux comprise à la lecture de la description qui suit et à l'examen des figures qui l'accompagnent. Celles ci ne sont présentées qu'à titre indicatif et nullement limitatif de l'invention. Les figures montrent :

- Figure 1 est une vue schématique d'une courbe de couple de vissage d'un joint fileté en fonction du nombre de tours de rotation effectués ;

- Figure 2 représente une plateforme pétrolière en mer illustrant l'utilisation d'une colonne de composants tubulaires selon l'invention ;

- Figure 3 est une vue en coupe longitudinale partielle d'un joint fileté selon un premier mode de réalisation de l'invention ;

- Figure 4 est une vue en coupe longitudinale partielle d'un joint fileté selon un deuxième mode de réalisation de l'invention ;

- Figure 5 est une vue en coupe longitudinale partielle d'un joint fileté selon un troisième mode de réalisation de l'invention ;

- Figures 6 à 9 sont des représentations en coupe longitudinale partielle et schématique d'un profil de joint fileté selon l'invention ;

- Figures 10 et 11 sont des vues en coupe longitudinale partielle de variante de réalisation de joint fileté selon l'invention.

On a représenté sur la figure 2 une installation de forage 10 et dans laquelle la présente invention peut être utilisée de manière avantageuse. Dans l'exemple décrit, l'installation 10 comprend une plate-forme offshore 12, flottant sur la mer. La plate-forme 12 comprend une tour de forage 14 (ou rig) équipée d'une table de rotation 16 (ou rotary table) ainsi que de nombreux accessoires permettant la manutention et la préhension des divers éléments utilisés pour la fabrication du puits et son exploitation. La plateforme 12 est ainsi située au droit d'un puits sous-marin 20 foré dans le fond marin F. Le puits sous-marin 20 peut être cuvelé ou non. L'installation 10 comprend une colonne 22 suspendue à la plate-forme 12 (dite marine riser) qui forme un conduit entre la plate-forme flottante 12 et le puits 20.

Dans l'exemple illustré sur la figure 2, une colonne à déposer 26, par exemple une colonne de casing, est attachée au moyen d'une pièce de raccordement 28 spécifique à une colonne de dépose 24 selon l'invention. Cette colonne de dépose 24 comporte plusieurs composants tubulaires connectés bout à bout par leur extrémités.

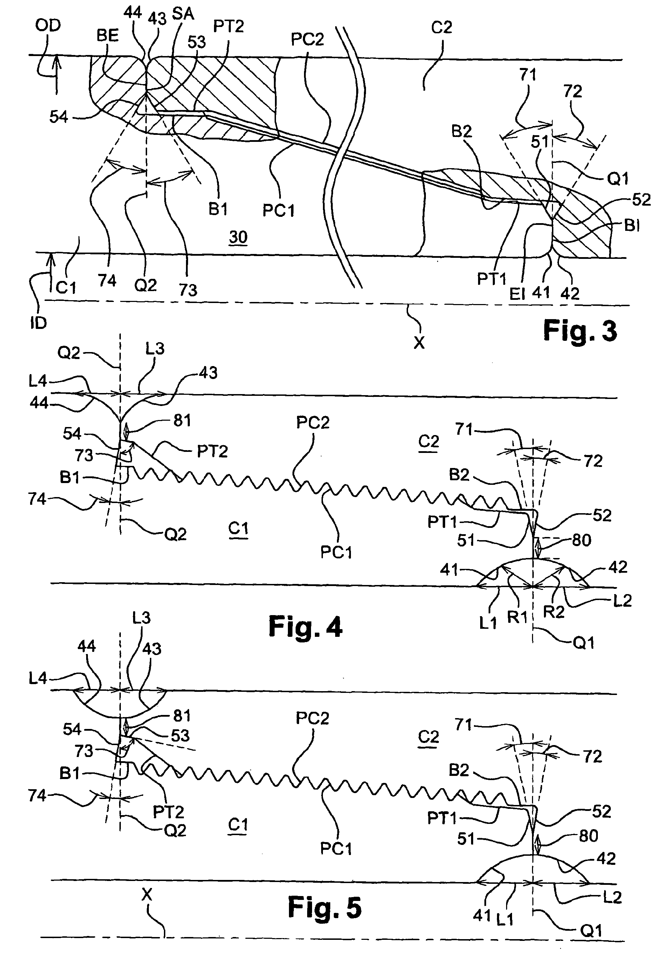

Des variantes de réalisation d'une portion d'un joint fileté entre deux composants tubulaires de la colonne de dépose 24, zone A de la figure 2, sont présentées en détail sur les Figures 3 à 5 et 10.

La Figure 3 montre un joint fileté 30 selon l'invention. Le joint 30 comprend un premier composant tubulaire et un deuxième composant tubulaire.

Le premier composant tubulaire comporte un premier corps C1 sensiblement cylindrique d'axe de révolution X. Le premier corps C1 présente une section transversale circulaire de diamètre extérieur OD compris entre 2"7/8 et 11 ", plus particulièrement entre 3,5"et 8"3/4, et de préférence entre 7 et 8"11/16, mesures données en pouces. Le corps C1 présente une butée externe BE au niveau de son pourtour extérieur. Le diamètre extérieur va décroissant à partir de la butée externe BE en direction de son extrémité libre. Le diamètre extérieur OD est maximal dans la portion du corps C1 à distance de l'extrémité libre.

Cette butée externe BE se présente sous la forme d'un renfoncement annulaire plat. Le plat de ce renfoncement forme un angle aigu ou droit avec l'axe X, en particulier de 90° sur la figure 3.

La butée externe BE est liée par une base B1 à une portion de connexion mâle filetée PC1. La base B1 s'étend le long de l'axe X et présente au niveau de son pourtour extérieur une surface annulaire sensiblement parallèle à l'axe X. La portion de connexion PC1 est de forme générale externe tronconique, de diamètre décroissant en s'éloignant de ladite base B1. La portion de connexion PC1 porte un filetage sur son pourtour extérieur. La portion de connexion PC1 est prolongée par une portion terminale PT1 non filetée. La portion terminale PT1 s'étend le long de l'axe X et forme une surface annulaire sensiblement parallèle à l'axe X au niveau de son pourtour extérieur.

Le corps C1 présente une butée interne au niveau de son extrémité axiale libre. Cette butée interne BI se présente sous la forme d'une surface annulaire plate. Le plat de cette surface forme un angle aigu ou droit avec l'axe X, en particulier de 90° sur la figure 3. La butée interne BI est reliée au pourtour intérieur défini par le corps C1. Le corps C1 est creux et définit un alésage axial de section transversale circulaire. En particulier le diamètre interne ID de l'alésage est compris entre 1" et 5", par exemple compris entre 2,5" et 4", et plus particulièrement de l'ordre de 3,5", mesures données en pouces. Dans la zone du corps C1 pour laquelle le pourtour extérieur est défini par le butée externe BE, la base B1, la portion de connexion PC1 la portion terminale PT1, le diamètre interne ID est sensiblement constant.

Le deuxième composant tubulaire comporte un deuxième corps C2 sensiblement cylindrique d'axe de révolution. En pratique, lorsque la connexion est réalisée entre les deux corps C1 et C2, les axes de révolution respectif des corps sont confondus. Dans la mesure où la figure 3 représente les corps C1 et C2 assemblés, la description qui va suivre se fera en référence à l'axe X.

Le deuxième corps C2 s'allonge le long de l'axe X. Il présente une section transversale circulaire de diamètre extérieur par exemple sensiblement égal au diamètre extérieur OD maximal du premier corps C1. L'extrémité axiale du deuxième corps C2, orientée vers le premier corps C1 lorsque le joint selon l'invention est formé, définit une surface d'appui SA.

La surface d'appui SA se présente sous la forme d'une surface annulaire plate. Le plat de cette surface forme un angle aigu ou droit avec l'axe X, en particulier de 90° sur la figure 3. La surface d'appui est reliée au pourtour extérieur du deuxième corps C2. Elle est également reliée au pourtour intérieur de ce deuxième corps C2 creux par une portion initiale PT2. La portion initiale PT2 est non filetée, elle définit un pourtour intérieur cylindrique d'axe parallèle à l'axe X. La portion initiale PT2 relie la surface d'appui SA à la portion de connexion femelle PC2. La portion de connexion PC2 présente une forme générale tronconique sur son pourtour intérieur et présente un filetage apte à coopérer avec le filetage de la portion de connexion mâle PC1.

La portion de connexion femelle PC2 est prolongée intérieurement par une base B2. Cette base B2 s'étend sensiblement le long de l'axe X et définit au niveau de son pourtour intérieur une surface annulaire sensiblement parallèle à l'axe X. Cette surface est reliée à un épaulement interne EI défini transversalement à l'axe X. Comme représenté à la Figure 3, l'épaulement interne EI définit une surface plane annulaire dans un plan perpendiculaire à l'axe X.

Lorsque le joint 30 est formé, la surface d'appui SA est au moins sur une partie de sa surface en contact avec la butée externe BE.

Dans l'exemple représenté Figure 3, lorsque le joint 30 est formé, la butée interne est au moins sur une partie de sa surface en contact avec l'épaulement interne EI.

Dans la description ci-dessus on vient de décrire une connexion à double butée, à la fois externe et interne.

En particulier les corps C1 et C2 sont des tooljoints rapportés par soudure aux extrémités axiales de corps de tige non représentés et de diamètre extérieur moyen inférieur à celui des corps C1 ou C2.

L'invention vise les profilés particuliers prévus de part et d'autre de la butée externe, de la butée interne, de la surface d'appui et ou de l'épaulement interne.

On définit ainsi

- un premier profil 41 entre la butée interne BI et le pourtour intérieur du premier corps C1, ce premier profil 41 correspondant au pourtour intérieur du premier corps C1 où le diamètre intérieur décroit de la butée interne vers une zone du premier corps C1 de diamètre intérieur constant le long d'une portion de l'axe X,

- un deuxième profil 42 entre l'épaulement interne EI et le pourtour intérieur du deuxième corps C2, ce deuxième profil 42 correspondant au pourtour intérieur du deuxième corps C2 où le diamètre intérieur décroit de l'épaulement interne vers une zone du deuxième corps C2 de diamètre intérieur constant le long d'une portion de l'axe X,

- un troisième profil 43 entre la surface d'appui SA et le pourtour extérieur du deuxième corps C2, ce troisième profil 43 correspondant au pourtour extérieur du deuxième corps C2 où le diamètre extérieur OD croit de la surface d'appui vers une zone du deuxième corps C2 de diamètre extérieur constant le long d'une portion de l'axe X,

- un quatrième profil 44 entre la butée externe BE et le pourtour extérieur du premier corps C1, ce quatrième profil 44 correspondant au pourtour extérieur du premier corps C1 où le diamètre extérieur OD croit de la butée externe vers une zone du premier corps C1 de diamètre extérieur constant le long d'une portion de l'axe X.

On définit de plus

- une première pente 51 entre la butée interne BI et la portion terminale PT1,

- une deuxième pente 52 entre l'épaulement interne EI et la base B2,

- une troisième pente 53 entre la surface d'appui SA et la portion initiale PT2, et

- une quatrième pente 54 entre la butée externe BE et la base B1.

Ainsi la butée interne BI est bordée respectivement par le premier profil 41 et la première pente 51, l'épaulement interne EI est bordé respectivement par le deuxième profil 42 et la deuxième pente 52, la surface d'appui SA est bordée respectivement par le troisième profil 43 et la troisième pente 53, et la butée externe est bordée respectivement par le quatrième profil 44 et la quatrième pente 54.

La longueur des profils 41 à 44 correspond à la longueur le long de l'axe X, de leur projection selon une droite perpendiculaire audit axe X.

Cette longueur est dans tous les cas supérieure à 1/16" (1.5875 mm).

Plus particulièrement la longueur des profils 41 et ou 42 est inférieure à la longueur de la portion terminale PT1 mesurée le long de l'axe X, cette longueur correspondant à la projection de ladite portion terminale PT1 selon la même droite perpendiculaire audit axe X. Une telle configuration permet de proposer une zone de contact entre la butée interne et l'épaulement interne avec une répartition progressive des zones de déformation lorsque le joint 30 est formé et qu'une surpression à l'intérieur des corps de l'ordre de 5000 psi est appliquée.

En particulier cette longueur L1 et respectivement L2 des profils 41 et 42 est définie pour être inférieure à la longueur le long de l'axe X de la portion terminale PT1. La longueur L1 est en particulier égale à la longueur L2. Elle peut être comprise entre 3 mm et 50 mm, par exemple de l'ordre de 20 mm.

Plus particulièrement la longueur des profils 43 et ou 44 est inférieure à la longueur de la portion initiale PT2 mesurée le long de l'axe X, cette longueur correspondant à la projection de ladite portion initiale PT2 selon la même droite perpendiculaire audit axe X. Une telle configuration permet de proposer une zone de contact entre la butée externe et la surface d'appui permettant de garantir un maintien de l'étanchéité et l'absence de décollement de ces deux surfaces lorsqu'une contrainte en traction de plus d'un millier de tonnes est exercée entre les corps C1 et C2.

En particulier cette longueur L3 et respectivement L4 des profils 43 et 44 est définie pour être inférieure à la longueur le long de l'axe X de la portion initiale PT2. La longueur L3 est en particulier égale à la longueur L4. Elle peut être comprise entre 3 et 50 mm, par exemple de l'ordre de 15 mm.

En particulier, ce premier profil 41 peut présenter, selon un plan de coupe longitudinal, une convexité ou une concavité vers l'intérieur du premier corps C1. Cette convexité ou concavité peut être monotone ou non.

Lorsque le premier profil 41 présente une courbure monotone, il peut par exemple être une portion de cercle ou d'ellipse. En variante, le premier profil 41 peut comporter deux plans inclinés avec une rupture de pente entre eux.

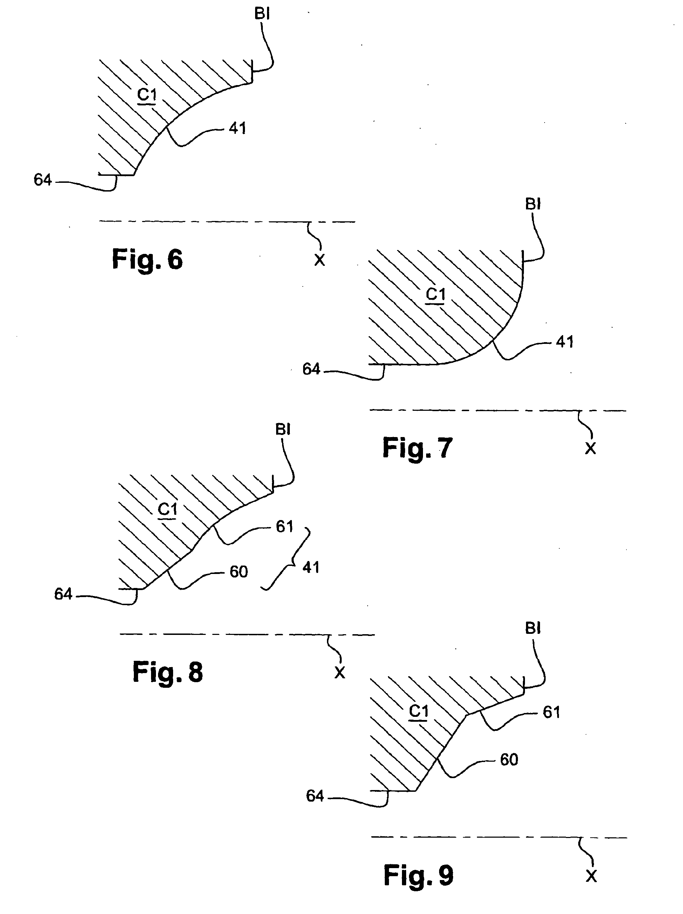

Les figures 6 à 9 représentent des profils types pour le profil 41. De manière symétrique non représentée, on déduit des profils type pour les profils 42 à 44.

En figure 6, un mode de réalisation du profil 41 le représente formant une portion de cercle concave vers l'extérieur. En figure 7, un autre mode de réalisation du profil 41 le représente formant une portion de cercle convexe vers l'extérieur. En figure 8, une autre alternative du mode de réalisation du profil 41 le représente formant un profil à deux pans avec une rupture de pente entre eux.

Dans l'exemple de la figure 8, les deux pans 60 et 61 sont tous deux inclinés par rapport à l'axe X. En variante non représentée, le pan 61 lié à la butée interne peut être parallèle à l'axe X. Dans l'exemple de la figure 8, la rupture de pente est formée à la moitié de leur longueur. En variante non représentée, l'un des pans peut être plus long que l'autre le long de l'axe X. Dans l'exemple de la figure 8, le pan 60 forme un angle aigu avec l'axe X supérieur à 10°, en particulier de 20°. Sur la figure 8, seul le pan 61 est concave vers l'extérieur. Sur la variante de la figure 9, les pans 60 et 61 forment ensemble une concavité. En variante, l'un ou les deux pans peuvent être plan ou courbe.

Lorsque le profil est convexe, comme à la figure 7, il se prolonge tangentiellement avec la portion 64 du corps C1 présentant le diamètre intérieur constant le long d'une portion de l'axe X. le profil 41 se prolonge également tangentiellement avec la butée interne BI.

En particulier, dans l'exemple de la figure 3, le premier profil 41 est convexe vers l'extérieur. Il présente dans cet exemple un rayon de courbure constant par exemple compris entre 10 et 300 mm, notamment de l'ordre de 25 mm. Dans l'exemple présenté à la figure 3, les profils 41 et 42 ne sont pas symétriques. Le deuxième profil 42 est également convexe vers l'extérieur, mais avec un rayon de courbure R2 par exemple compris entre 10 et 300 mm, notamment de l'ordre de 25 mm, en particulier inférieur au premier rayon de courbure R1. De préférence, les profils 41 et 42 sont symétriques et convexes.

Selon une variante de l'invention non représentée, on peut concevoir une autre configuration dans laquelle les profils 41 et 42 ne sont pas symétriques l'un de l'autre, de courbure différente, l'un par exemple concave et l'autre convexe.

En variante, aux figures 4 et 5, le premier profil 41 est concave de rayon de courbure compris entre 10 et 300 mm, notamment de l'ordre de 25 mm. Selon ces modes de réalisations des figures 4 et 5, les premier et deuxième profils 41 et 42 sont symétriques par rapport à un plan Q1 passant par la surface de contact entre la butée interne et l'épaulement interne.

En particulier, dans les modes de réalisation des figures 4 à 5, le rayon de courbure R1 du premier profil 41 est supérieur à sa longueur L1. Dans ces modes de réalisation, les profils 41 et 42 ne forment pas ensemble un profil formant une portion de cercle ou d'ellipse. En effet, ils forment ensemble deux portions de cercle mises tangentiellement bout à bout. Cette configuration permet d'améliorer la tenue à pression. Une telle configuration permet également d'éviter de créer des zones de turbulences au niveau du joint et évite donc les pertes de charge du fluide véhiculé dans la colonne.

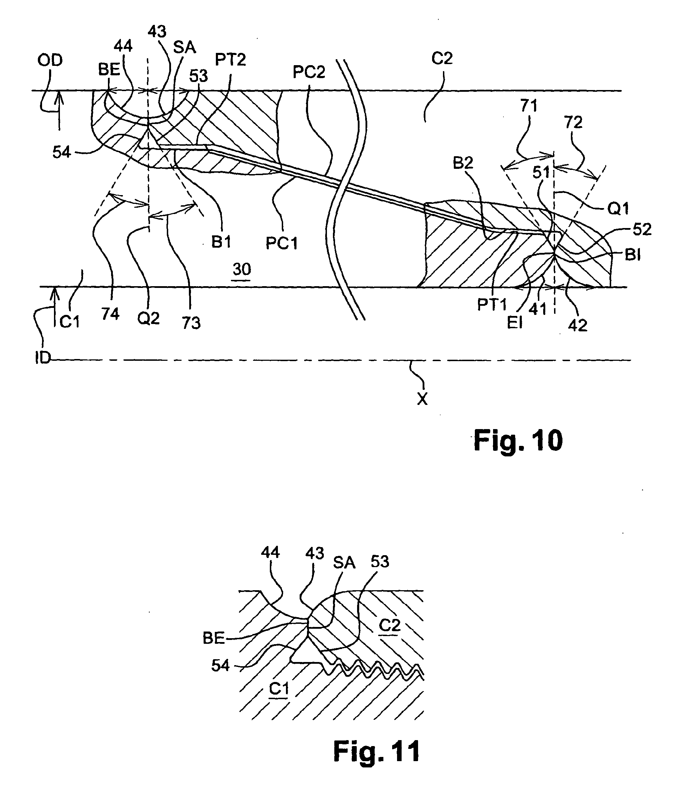

La figure 10 correspond à une inversion des profils respectivement convexe et concave de ceux représentés à la figure 4.

Selon les modes de réalisation représentés, les profils 41 et 42 définissent ensemble un profil de continuité pour l'alésage intérieur des premier et deuxième corps C1 et C2. On évite ainsi l'encrassement de cette zone d'interface par des résidus du processus de cimentation réalisé au moyen de colonne présentant de tels joints.

En particulier, dans l'exemple des figures 3 et 4, le troisième profil 43 est convexe vers l'extérieur. Il présente dans cet exemple un rayon de courbure constant par exemple compris entre 5 et 100 mm, notamment de l'ordre de 25 mm. Dans les exemples présentés aux figures 3 à 5, les troisième et quatrième profils 43 et 44 sont symétriques par rapport à un plan Q2 passant par la surface de contact entre la butée externe et la surface d'appui. Ce type de configuration donne un avantage supérieur en termes de résistance mécanique et permet d'éviter en opération le décollement de la butée externe BE relativement à la surface d'appui SA.

Selon une variante de l'invention non représentée, on peut concevoir une autre configuration dans laquelle les profils 43 et 44 ne sont pas symétriques l'un de l'autre, de courbure différente, l'un par exemple concave et l'autre convexe, et ou de rayon de courbure différent. Par exemple, à la figure 11, le profil 43 est convexe, tandis que le profil 44 est concave. Cette différenciation permet une visibilité depuis l'extérieur, et peut être utile pour le foreur amené à manipuler et identifier différentes classes de tubes.

En variante, à la figure 5, le troisième profil 41 est concave vers l'extérieur de rayon de courbure compris entre 5 et 100 mm, notamment de l'ordre de 25 mm.

Dans les exemples présentés aux figures 3 à 5, les troisième et quatrième profils 43 et 44 présentent un rayon de courbure inférieur strictement à leur longueur respective.

Dans l'exemple de la figure 3, la première pente 51 forme un angle 71 compris entre 0° et 90° avec le plan Q1. La deuxième pente 52 forme avec ce même plan Q1 un angle aigu, par exemple compris entre 0° et 45°, adjacent à l'angle 72. Dans l'exemple représenté, les angles 71 et 72 sont identiques. Dans les variantes de réalisation des figures 4 et 5, les angles 71 et 72 ne sont pas égaux, l'angle 71 pouvant être supérieur à l'angle 72.

Dans les exemples des figures 3 à 5, les pentes 51 et 52 coupent le plan Q1 en un sommet commun. De fait la butée interne BI et l'épaulement interne EI ont une hauteur de contact 80 identique, telle que la butée interne BI est en regard exclusivement de l'épaulement interne EI. Cette hauteur de contact 80, mesurée perpendiculairement à l'axe X, est de préférence déterminée pour supporter, sans observer de plastification, une force de compression au moins égale à 4,5 fois le poids du corps auquel il est attaché, ou au moins égale à 1,5 fois le poids d'au moins deux, par exemple d'au moins trois, et de préférence quatre, corps tubulaires joints bout à bout. Cette hauteur de contact 80 peut également être appelée épaisseur radiale.

Dans l'exemple de la figure 3, la troisième pente 53 forme un angle 73 avec le plan Q2 compris entre 0° et 90°. La quatrième pente 54 forme avec ce même plan Q2 un angle aigu adjacent 74. Dans l'exemple représenté, les angles 73 et 74 sont identiques. Dans les variantes de réalisation des figures 4 et 5, les angles 73 et 74 ne sont pas égaux, l'angle 74 de la quatrième pente étant inférieur à l'angle 73. En effet, l'angle 74 est par exemple compris entre 0° et 45°.

Dans les exemples des figures 3 à 5, les pentes 53 et 54 coupent le plan Q2 en un sommet commun. De fait la butée externe BE et la surface d'appui SA ont une hauteur de contact 81 identique, telle que la butée externe BE est en regard exclusivement de la surface d'appui SA. Cette hauteur de contact 81, mesurée perpendiculairement à l'axe X, est déterminée pour supporter, sans observer de plastification, une force de compression au moins égale à 6 fois le poids du corps auquel il est attaché, ou au moins égale à 1,5 fois le poids de trois, de préférence quatre, corps tubulaires joints bout à bout. Cette hauteur de contact 81 peut également être appelée épaisseur radiale.

Pour les applications plus particulièrement visée par l'invention, et qui concernent le domaine du "Landing String" et du "Drill Pipe Risers", dans la mesure où la transmission de couple en opération est quasiment inexistante au niveau des connexions, il est donc possible de réduire le couple de vissage d'assemblage des composants tubulaires, de sorte que la réalisation d'un joint selon l'invention est facilitée pour les utilisateurs.

En pratique, un couple de vissage permet de créer une pression de contact entre deux butées, que ce soit la butée externe BE avec la surface d'appui SA, ou encore la butée interne BI avec l'épaulement interne EI. En effet, le joint selon l'invention peut être un joint à simple butée, à savoir uniquement entre la butée externe BE avec la surface d'appui SA, ou un joint à double butée, comme cela est représenté dans les figures détaillées ci-dessus, et pour lequel à la fois la butée externe BE est en pression contre la surface d'appui SA, et la butée interne BI est en pression contre l'épaulement interne.

Le couple de vissage à appliquer pour éviter la séparation de la butée externe BE et de la surface d'appui SA est une fonction de la surface S de butée entre la externe BE et de surface d'appui SA, ainsi que de la position respective de la butée externe BE et de la surface d'appui SA par rapport à l'axe de la connexion. Cette position des surfaces BE et SA ; tout comme celle des surfaces BE et EI est contrôlée par les choix respectifs des premier, deuxième, troisième et quatrième profils. Le même raisonnement s'applique pour déterminer le couple de vissage à appliquer pour éviter la séparation des surfaces BE et EI.

La hauteur 80, et respectivement la hauteur 81, ici symbolisée par la lettre h, ont été déterminée de sorte que l'équation ci-dessous soit remplie, sachant que dans le domaine d'applications visées par l'invention, la force F de séparation de butée peut aller de 500 000 lbs à 3 000 000 lbs et la pression P peut varier de 10 000 à 100 000 PSI, la pression P désignant la pression moyennée sur la longueur du contact défini entre BE et SA respectivement, ou entre BI et EI réciproquement.

$$S = \pi.\left(A^2 - \left(A - 2h\right)^2\right) = F/P$$

Et où :

A est la distance maximale de la surface de contact définie entre BE et SA, ou entre BI et EI réciproquement, lorsque le joint est réalisé, avec l'axe X de symétrie de révolution du composant tubulaire.

La force F est par ailleurs fonction des performances du composant tubulaire notamment définies par le diamètre extérieur OD, son poids et le grade du matériau dans lequel il est réalisé. Avec la configuration qui vient d'être décrite ci-dessus, on obtient un joint fileté 30, lorsque les premiers et deuxième composants sont assemblés l'un à l'autre avec un couple de serrage tel que le joint est compatible avec des connexions réalisées selon les normes API. En particulier, l'assemblage étant obtenu avec une clé présentant une capacité de couple inférieure à 75 000 ft.lbs, et en particulier de l'ordre de 68 000 ft.lbs. Une telle configuration présente d'autres avantages, comme la facilité de passage des outillages à l'intérieur de la colonne de dépose.

Un joint selon l'invention peut également être mis en oeuvre entre deux composants tubulaires destinés à former une colonne de forage, en particulier entre composants de la colonne de fond de puits, appelée BHA, plus particulièrement pour la connexion de pièces appelées drill-collar. Un joint selon l'invention peut également être mis en oeuvre entre deux composants d'une colonne d'exploitation pétrolière, ou encore de risers.

Dans toute la description, l'expression « comportant un » doit être considérée comme étant synonyme de « comportant au moins un », sauf si le contraire est spécifié.

## Revendications

1. Joint (30) fileté tubulaire comprenant un premier composant tubulaire vissé sur un deuxième composant tubulaire, lesdits composants tubulaires étant destinés à l'exploration ou l'exploitation d'un puits d'hydrocarbures, notamment destiné à former une colonne de dépose,

   - le premier composant tubulaire comportant un premier corps (C1) sensiblement cylindrique d'axe de révolution (X) terminé par une butée externe (BE), cette butée externe (BE) étant reliée au pourtour extérieur du premier corps par un quatrième profil (44) de diamètre extérieur croissant de la butée externe vers le premier corps, et liée à une portion de connexion mâle filetée (PC1) prolongée par une portion terminale (PT1) non filetée formant une surface de butée interne (BI) à son extrémité axiale, telle que la butée interne (BI) est reliée au pourtour intérieur du premier corps par un premier profil (41) de diamètre intérieur décroissant de la butée interne vers l'intérieur du premier corps
   - le deuxième composant tubulaire comportant un deuxième corps (C2) sensiblement cylindrique définissant à une extrémité libre une surface d'appui (SA) pour la butée externe, cette surface d'appui étant reliée au pourtour extérieur du deuxième corps par un troisième profil (43) de diamètre extérieur croissant de la surface d'appui vers le corps, le corps présentant sur sa surface interne une portion initiale (PT2) non filetée reliant la surface d'appui à une portion de connexion femelle filetée (PC2), propre à être vissée à la portion de connexion mâle filetée, et se terminant par un épaulement interne (EI) en regard de la butée interne, l'épaulement interne étant relié au pourtour intérieur du deuxième corps par un deuxième profil (42) de diamètre intérieur décroissant de l'épaulement interne vers l'intérieur du corps

**caractérisé en ce que** l'un au moins du premier profil ou du deuxième profil est convexe ou concave, et que la longueur (L1, L2) du premier profil (41) et ou du deuxième profil (42) le long de l'axe de révolution est supérieure à (1/16") 1.5875 mm et inférieure à la longueur de la portion terminale (PT1), et ou **en ce que** la longueur (L3, L4) du troisième profil (43) et ou du quatrième profil (44) le long de l'axe de révolution est supérieure à (1/16") 1.5875 mm et inférieure à la longueur de la portion initiale (PT2).

2. Joint selon la revendication 1 **caractérisé en ce que** les longueurs (L1, L2, L3, L4) des premier (41), deuxième (42), troisième (43) et quatrième (44) profils sont comprises entre 3 mm et 50 mm, de préférence entre 10 et 25 mm, mieux entre 15 et 20 mm.

3. Joint selon l'une quelconque des revendications précédentes **caractérisé en ce que** le troisième profil est symétrique du quatrième profil.

4. Joint selon l'une quelconque des revendications précédentes **caractérisé en ce que** le premier profil est symétrique du deuxième profil.

5. Joint selon l'une quelconque des revendications précédentes **caractérisé en ce que** l'un des profils présente une pente supérieure à 10°.

6. Joint selon l'une quelconque des revendications précédentes **caractérisé en ce que** l'un des profils présente une portion de courbure convexe.

7. Joint selon l'une quelconque des revendications précédentes **caractérisé en ce que** l'un des profils présente une portion de courbure concave.

8. Joint selon l'une quelconque des revendications précédentes **caractérisé en ce que** l'un des profils est un arc de cercle ou d'ellipse.

9. Joint selon l'une quelconque des revendications précédentes **caractérisé en ce que** la butée interne est reliée par une première pente (51) à la portion terminale (PT1) et l'épaulement interne est relié par une deuxième pente (52) à une deuxième base (B2) prolongée par la portion de connexion femelle (PC2), les deux pentes étant sécantes et formant chacune un angle non nul avec le plan de contact entre la butée interne et l'épaulement interne.

10. Joint selon la revendication précédente **caractérisé en ce que** la première et la deuxième pente ont un sommet commun.

11. Joint selon l'une quelconque des revendications précédentes **caractérisé en ce que** la surface d'appui (SA) est reliée par une troisième pente (53) à la portion initiale (PT2), et la butée externe est reliée par une quatrième pente (54) à une base (B1) prolongée par la portion de connexion mâle (PC1), les deux pentes étant sécantes et formant chacune un angle non nul avec le plan de contact entre la butée externe et la surface d'appui.

12. Joint selon la revendication précédente **caractérisé en ce que** la troisième et la quatrième pente ont un sommet commun.

13. Ensemble comportant un premier corps et un deuxième corps, les deux corps étant retenus par un joint selon l'une quelconque des revendications précédentes **caractérisé en ce que** la butée interne a une épaisseur radiale, destinée à être mise au contact de l'épaulement intérieur, déterminée pour supporter, sans observer de plastification, une force de compression au moins égale à 4,5 fois le poids du premier corps, ou au moins égale à 1,5 fois le poids d'au moins deux, par exemple d'au moins trois, et de préférence quatre, corps tubulaires joints bout à bout et terminés axialement par ladite butée interne.

14. Ensemble selon l'une quelconque des revendications précédentes **caractérisé en ce que** le premier corps est soudé à une extrémité d'un corps de tige de révolution tel que la butée externe est axialement opposée à la soudure, et le deuxième corps est soudé à une extrémité d'un autre corps de tige de révolution tel que la surface d'appui est axialement opposée à la soudure

15. Procédé d'assemblage d'un joint fileté selon l'une quelconque des revendications précédentes **caractérisé en ce qu'**un couple de serrage supérieur au couple d'accostage butée CAB dudit joint est obtenu au moyen d'une clé présentant une capacité de couple inférieure à 101 686 N.m (75 000 ft.lbs).

**Patentansprüche**

1. Gewinderohrverbindung (30) mit einer ersten rohrförmigen Komponente, die auf eine zweite rohrförmige Komponente geschraubt ist, wobei die rohrförmigen Komponenten zur Erkundung oder zum Betreiben eines Kohlenwasserstoffbrunnens bestimmt sind, insbesondere zur Bildung eines Landestrangs, wobei

   - die erste rohrförmige Komponente einen im Wesentlichen zylinderförmigen ersten Körper (C1) aufweist mit einer Rotationsachse (X), die bestimmt wird durch einen äußeren Anschlag (BE), wobei dieser äußere Anschlag (BE) mit dem Außenumfang des ersten Körpers über ein viertes Profil (44) verbunden ist, das einen Außendurchmesser aufweist, der von dem äußeren Anschlag zu dem ersten Körper hin ansteigt und wobei der Anschlag mit einem männlichen Gewindebereich (PC1) verbunden ist, der durch einen nicht mit einem Gewinde versehenen Endbereich (PT1) verlängert ist, der eine innere Anschlagsfläche (BI) an seinem axialen Ende bildet, derart, dass der innere Anschlag (BI) mit dem Innenumfang des ersten Körpers über ein erstes Profil (41) verbunden ist, das einen Innendurchmesser aufweist, der von dem inneren Anschlag aus zum Inneren des ersten Körpers hin abnimmt,
   - die zweite rohrförmige Komponente einen zweiten im Wesentlichen zylinderförmigen Körper (C2) aufweist, der an einem freien Ende eine Auflagefläche (SA) für den äußeren Anschlag definiert, wobei die Auflagefläche mit dem Außenumfang des zweiten Körpers über ein drittes Profil (43) verbunden ist, das einen Außendurchmesser aufweist, der von der Auflagefläche aus zum Körper hin ansteigt, wobei der Körper auf seiner Innenfläche einen nicht mit einem Gewinde versehenen Anfangsbereich (PT2) aufweist, der eine Auflagefläche mit einem weiblichen Verbindungsbereich (PC2), der mit einem Gewinde versehen ist, verbindet, der geeignet ist, an dem mit einem männlichen Gewinde versehenen Bereich geschraubt zu werden und der mit einer inneren Schulter (EI) gegenüber dem inneren Anschlag endet, wobei die innere Schulter mit dem Innenumfang des zweiten Körpers über ein zweites Profil (42) verbunden ist, dessen Innendurchmesser von der inneren Schulter zum Inneren des Körpers hin abnimmt,

   **dadurch gekennzeichnet, dass** mindestens eines des ersten oder des zweiten Profils konvex oder konkav ist, und dadurch, dass die Länge (L1, L2) des ersten Profils (41) und/oder des zweiten Profils (42) entlang der Rotationsachse größer als (1/16") 1,5875 mm und kleiner als die Länge des Endbereichs (PT1) ist, und/oder dadurch, dass die Länge (L3, L4) des dritten Profils (43) und/oder des vierten Profils (44) entlang der Rotationsachse größer ist als (1/16") 1,5875 mm und kleiner als die Länge des Anfangsbereichs (PT2).

2. Verbindung nach Anspruch 1, **dadurch gekennzeichnet, dass** die Längen (L1, L2, L3, L4) des ersten (41), des zweiten (42), des dritten (43) und des vierten (44) Profils zwischen 3 mm und 50 mm liegen, vorzugsweise zwischen 10 und 25 mm, besser noch zwischen 15 und 20 mm.

3. Verbindung nach einem der vorstehenden Ansprüche, **dadurch gekennzeichnet, dass** das dritte Profil symmetrisch zu dem vierten Profil ist.

4. Verbindung nach einem der vorstehenden Ansprüche, **dadurch gekennzeichnet, dass** das erste Profil symmetrisch zu dem zweiten Profil ist.

5. Verbindung nach einem der vorstehenden Ansprüche, **dadurch gekennzeichnet, dass** eines der Profile eine Steigung aufweist, die größer als 10° ist.

6. Verbindung nach einem der vorstehenden Ansprüche, **dadurch gekennzeichnet, dass** eines der Profile einen Bereich mit konvexer Krümmung aufweist.

7. Verbindung nach einem der vorstehenden Ansprüche, **dadurch gekennzeichnet, dass** eines der Profile einen Bereich mit konkaver Krümmung aufweist.

8. Verbindung nach einem der vorstehenden Ansprüche, **dadurch gekennzeichnet, dass** eines der Profile ein Kreisbogen oder ein Ellipsenbogen ist.

9. Verbindung nach einem der vorstehenden Ansprüche, **dadurch gekennzeichnet, dass** der innere Anschlag über eine erste Steigung (51) mit dem Endbereich (PT1) verbunden ist, und die innere Schulter über eine zweite Steigung (52) mit einer zweiten Basis (B2) verbunden ist, die durch den weiblichen Verbindungsbereich (PC2) verlängert ist, wobei die beiden Steigungen sich schneiden und jeweils einen Winkel ungleich Null mit der Kontaktebene zwischen dem inneren Anschlag und der inneren Schulter bilden.

10. Verbindung nach dem vorstehenden Anspruch, **dadurch gekennzeichnet, dass** die erste Steigung und die zweite Steigung einen gemeinsamen Scheitelpunkt aufweisen.

11. Verbindung nach einem der vorstehenden Ansprüche, **dadurch gekennzeichnet, dass** die Auflagefläche (SA) über eine dritte Steigung (53) mit dem Anfangsbereich (PC2) verbunden ist, und der äußere Anschlag über eine vierte Steigung (54) mit einer Basis (B1) verbunden ist, die durch den männlichen Verbindungsbereich (PC1) verlängert wird, wobei die beiden Steigungen sich schneiden und einen Winkel ungleich Null mit der Kontaktebene zwischen dem äußeren Anschlag und der Auflagefläche bilden.

12. Verbindung nach dem vorstehenden Anspruch, **dadurch gekennzeichnet, dass** die dritte und die vierte Steigung einen gemeinsamen Scheitelpunkt aufweisen.

13. Einheit mit einem ersten Körper und einem zweiten Körper, wobei die beiden Körper durch eine Verbindung nach einem der vorstehenden Ansprüche gehaltert sind, **dadurch gekennzeichnet, dass** der innere Anschlag eine radiale Verdickung aufweist, die dazu bestimmt ist, in Kontakt mit der inneren Schulter gebracht zu werden und die bestimmt ist, ohne plastische Verformung zu beobachten, eine Druckkraft auszuhalten, die mindestens gleich dem 4,5-fachen des Gewichts des ersten Körpers ist oder mindestens gleich dem 1,5-fachen des Gewichts von mindestens zwei, zum Beispiel mindestens drei, und vorzugsweise vier, rohrförmigen Körpern ist, die mit ihren Enden jeweils verbunden sind und axial mit dem inneren Anschlag enden.

14. Einheit nach einem der vorstehenden Ansprüche, **dadurch gekennzeichnet, dass** der erste Körper an ein Ende eines Körpers in Form einer rotationssymmetrischen Stange angeschweißt ist, derart, dass der äußere Anschlag der Verschweißung axial gegenüberliegt, und der zweite Körper an ein Ende eines weiteren Körpers in Form einer rotationssymmetrischen Stange angeschweißt ist, derart, dass die Auflagefläche der Verschweißung axial gegenüberliegt.

15. Verfahren zum Zusammenfügen einer Gewindeverbindung nach einem der vorstehenden Ansprüche, **dadurch gekennzeichnet, dass** ein Eindrehmoment größer als das Andruckdrehmoment CAB der Verbindung erhalten wird, mittels eines Schlüssels, der eine Drehmomentkapazität aufweist, die kleiner als 101 686 N.m (75 000 ft/lbs) ist.

**Claims**

1. A threaded tubular connection (30) comprising a first tubular component made up onto a second tubular component, said tubular components being intended for exploration or working a hydrocarbon well, in particular to form a landing string;

• the first tubular component comprising a first substantially cylindrical body (C1) with an axis of revolution (X) terminated by an external abutment (BE), said external abutment (BE) being linked to the external circumference of the first body via a fourth profile (44) with an external diameter which increases from the external abutment towards the first body, and linked to a male threaded connection portion (PC1) extended by a terminal non-threaded portion (PT1) forming an internal abutment surface (BI) at its axial end, such that the internal abutment (BI) is linked to the internal circumference of the first body via a first profile (41) with an internal diameter decreasing from the internal abutment towards the inside of said first body;
• the second tubular component comprising a second substantially cylindrical body (C2) defining a bearing surface (SA) at one free end for the external abutment, said bearing surface being linked to the external circumference of the second body via a third profile (43) with an external diameter which increases from the bearing surface towards the body, the body having an initial non-threaded portion (PT2) on its internal surface linking the bearing surface to a female threaded connection portion (PC2) which can be made up onto the male threaded connection portion, and terminating in an internal shoulder (EI) facing the internal abutment, the internal shoulder being linked to the internal circumference of the second body via a second profile (42) with an internal diameter which decreases from the internal shoulder towards the inside of the body;

**characterized in that** at least one of the first profile or the second profile is convex or concave; and **in that** the length (L1, L2) of the first profile (41) and/or the second profile (42) along the axis of revolution is more than (1/16")1.5875 mm and less than the length of the terminal portion (PT1); and/or **in that** the length (L3, L4) of the third profile (43) and/or the fourth profile (44) along the axis of revolution is more than (1/16")1.5875 mm and less than the length of the initial portion (PT2).

2. A connection according to claim 1, **characterized in that** the lengths (L1, L2, L3, L4) of the first (41), second (42), third (43) and fourth (44) profiles are in the range 3 mm to 50 mm, preferably in the range 10 to 25 mm, more preferably in the range 15 to 20 mm.

3. A connection according to any one of the preceding claims, **characterized in that** the third profile is symmetrical with the fourth profile.

4. A connection according to any one of the preceding claims, **characterized in that** the first profile is symmetrical with the second profile.

5. A connection according to any one of the preceding claims, **characterized in that** one of the profiles has an inclination of more than 10°.

6. A connection according to any one of the preceding claims, **characterized in that** one of the profiles has a portion with a convex curvature.

7. A connection according to any one of the preceding claims, **characterized in that** one of the profiles has a portion with a concave curvature.

8. A connection according to any one of the preceding claims, **characterized in that** one of the profiles is an arc of a circle or an ellipse.

9. A connection according to any one of the preceding claims, **characterized in that** the internal abutment is linked to the terminal portion (PT1) via a first inclined portion (51), and the internal shoulder is linked to a second base (B2) prolonged by the female connection portion (PC2) via a second inclined portion (52), the two inclined portions being secants and each forming a non-zero angle with the contact plane between the internal abutment and the internal shoulder.

10. A connection according to the preceding claim, **characterized in that** the first and the second inclined portion have a common vertex.

11. A connection according to any one of the preceding claims, **characterized in that** the bearing surface (SA) is linked to the initial portion (PT2) via a third inclined portion (53) and the external abutment is linked via a fourth inclined portion (54) to a base (B1) prolonged by the male connection portion (PC 1), the two inclined portions being secants and each forming a non-zero angle with the contact plane between the external abutment and the bearing surface.

12. A connection according to the preceding claim, **characterized in that** the third and fourth inclined portions have a common vertex.

13. An assembly comprising a first body and a second body, the two bodies being retained by means of a connection according to any one of the preceding claims, **characterized in that** the internal abutment has a radial thickness, intended to be brought into contact with the internal shoulder, which is determined so as to be capable of supporting, without observing yielding, a compressive force at least equal to 4.5 times the weight of the first body, or at least equal to 1.5 times the weight of at least two, for example at least three, and preferably four, tubular bodies connected end-to-end and terminated axially by said internal abutment.

14. An assembly according to any one of the preceding claims, **characterized in that** the first body is welded to one end of a pipe body of revolution such that the external abutment is axially opposed to the weld, and the second body is welded to one end of another pipe body of revolution such that the bearing surface is axially opposed to the weld.

15. A method for connecting a threaded connection according to any one of the preceding claims, **characterized in that** a makeup torque which is higher than the shouldering torque CAB of said connection is obtained using tongs having a torque capacity of less than 101 686 N.m (75000 ft.lb).

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2904031
- US 4548431 A
- WO 2006092649 A
- US 20100308577 A